# EUROPEAN PATENT SPECIFICATION

(11) **EP 3 893 435 B1**
(45) Date of publication and mention of the grant of the patent: **31.05.2023**
(21) Application number: 19893323.6
(22) Date of filing: 12.10.2019
(51) Int. Cl.: H04L 41/34, H04L 41/0213, H04L 12/46

(54) **METHOD AND APPARATUS FOR PROCESSING IOAM INFORMATION**
VERFAHREN UND VORRICHTUNG ZUR VERARBEITUNG VON IOAM-INFORMATIONEN
PROCÉDÉ ET APPAREIL DE TRAITEMENT D'INFORMATIONS IOAM

(30) Priority: 05.12.2018 CN 201811482361
(43) Date of publication of application: 13.10.2021
(73) Proprietor: ZTE Corporation, shenzhen Guangdong 518057 (CN)
(72) Inventor: WANG, Tongle, Shenzhen, Guangdong 518057 (CN)
(74) Representative: Canzler & Bergmeier Patentanwälte Partnerschaft mbB
(86) International application number: PCT/CN2019/110790
(87) International publication number: WO 2020/114083

(56) References cited:
- CN-A- 108 737 124
- CN-A- 108 737 128
- CN-A- 108 781 171
- SONG H ET AL: "In-situ OAM Processing in Tunnels; draft-song-ippm-ioam-tunnel-mode-00.txt", IPPM INTERNET-DRAFT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 June 2018 (2018-06-25), pages 1-8, XP015127129,
- BROCKNERS F ET AL: "Encapsulations for In-situ OAM Data; draft-brockners-inband-oam-transport-05.tx t", IPPM INTERNET-DRAFT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 2 July 2017 (2017-07-02), pages 1-30, XP015120710,
- X Min ET AL: "Extended OAM to Carry In-situ OAM Configuration Data draft-xiao-ippm-ioam-conf-state-01", IPPM Working Group, 12 September 2018 (2018-09-12), pages 1-11, XP055547984, Retrieved from the Internet: URL:https://tools.ietf.org/pdf/draft-xiao- ippm-ioam-conf-state-01.pdf [retrieved on 2019-01-28]
- Song H et al: " In-Situ OAM Processing in Tunnels Draft-Song-Ippm-Ioam-Tunnel-Mode-00 ", Ippm Internet-Draft, 25 June 2018 (2018-06-25), pages 1-8, XP015127129,
- Brockners F et al: " Encapsulations for In-Situ OAM Data Draft-Brockners-Inband-Oam-Transport-05 ", Ippm Internet-Draft, 2 July 2017 (2017-07-02), pages 1-30, XP015120710,

## Description

The present application claims the priority from Chinese Patent Application No. 201811482361.9, filed with the Chinese Patent Office on December 5, 2018.

### TECHNICAL FIELD

Embodiments of the present disclosure relate to, but are not limited to, network communication technology, and in particular, relate to a processing method and device for In-situ Operations Administration and Maintenance (OAM) (In-band OAM or In-situ OAM) information.

### BACKGROUND

On one hand, a data center network has put higher requirements on time delay, packet loss, forwarding paths, reliability and the like. On the other hand, there is an urgent need for a network visualization technology that can continuously acquire operation data of the network to provide decision-making guidance for network fault removal, network planning, traffic adjustment and the like.

In-band OAM is a kind of In-situ OAM technology that realizes visualization of the data center network. With development of technologies such as large-capacity, high-speed, programmable chips, and Programming Protocol-Independent Packet Processors (P4), the In-situ OAM technology has also gradually been proposed and applied. A current technical draft is mainly In-site OAM, which is also called In-band OAM, of the Internet Engineering Task Force (IETF). Hereinafter, the In-site OAM and the In-band OAM are collectively called IOAM.

The IOAM related draft explains methods of using Generic Routing Encapsulation (GRE) protocol, Internet Protocol Version 6 (IPV6), Virtual Extensible Local Area Network (VXLAN), Network Service Host (NSH) and Segment Routing (SR) as transmission protocols in the network, but the current draft has not yet proposed an IOAM solution for tunnel splicing scenarios. Non-patent Document "SONG H ET AL: "In-situ OAM Processing in Tunnels; draft-song-ippm-ioam-tunnel-mode-00.txt" , IPPM INTERNET-DRAFT INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 June 2018 (2018-06-25), pages 1-8, XP015127129" describes the In-situ OAM (iOAM) processing behavior in a network with tunnels. Specifically, the iOAM processing in tunnels with the uniform model and the pipe model is discussed. The procedure is applicable to different type of tunnel protocols.

### SUMMARY

The embodiments of the present application provide a processing method and device for IOAM information, which can realize transmission of IOAM information in a tunnel splicing scenario, and avoid loss of IOAM information caused by ending of the tunnel. The features of the processing method and device for IOAM information according to the present invention are defined in the independent claims, and the preferable features according to the present invention are defined in the dependent claims.

The embodiments of the present application provide a processing method for IOAM information, according to independent claim 1.

The embodiments of the present application provide a processing device for IOAM information, according to independent claim 4.

The embodiments of the present application provide a computer-readable storage medium having a computer program stored thereon. When the computer program is executed by a processor, any above-mentioned processing method for IOAM information is realized.

The embodiments of the present application include: receiving a data message; removing an original outer layer tunnel header of the data message and determining a tunnel type of an egress, in response to determining that a current node is an end point of a current tunnel according to the original outer layer tunnel header of the data message; adding IOAM information in the data message and IOAM information of the current node to the data message, according to whether the current node supports adding IOAM information for the tunnel type of the egress; and encapsulating a new outer layer tunnel header corresponding to the tunnel type of the egress for the data message, and sending the encapsulated data message to a next node. According to the embodiments of the present application, when the current node is the end point of the current tunnel, the IOAM information in the data message and the IOAM information of the current node are added to the data message according to whether the current node supports adding IOAM information for the tunnel type of the egress. In this way, the transmission of IOAM information in the tunnel splicing scenario is realized, the loss of IOAM information caused by the ending of the tunnel is avoided, and the IOAM information can be continuously obtained to provide decision-making guidance for a network.

Other features and advantages of the embodiments of the present application will be described in the following specification, and partly become obvious from the specification, or can be understood by implementing the embodiments of the present application. The purpose and other advantages of the embodiments of the present application can be realized and obtained through the structures specifically pointed out in the specification, claims and drawings.

### BRIEF DESCRIPTION OF THE DRAWINGS

The drawings are used to provide a further understanding of the technical solution of the embodiments of the present application, and constitute a part of the specification, and are used to explain the technical solution of the embodiments of the present application together with the embodiments of the present application, and do not constitute limits to the technical solution of the embodiments of the present application.
Fig. 1(a) is a first topological schematic diagram of the splicing for tunnels of the same type at an egress gateway.
Fig. 1(b) is a first topological schematic diagram of the splicing for tunnels of different types at an egress gateway.
Fig. 2 is a flowchart of a processing method for IOAM information.
Fig. 3(a) is a second topological schematic diagram of the splicing for tunnels of the same type at an egress gateway.
Fig. 3(b) is a second topological schematic diagram of the splicing for tunnels of different types at an egress gateway.
Fig. 4 is a schematic diagram of a structural composition of a processing device for IOAM information.

### DETAILED DESCRIPTION

Hereinafter, the embodiments of the present application will be described in detail with reference to the drawings. It should be noted that the embodiments in the present application and features in the embodiments can be combined with each other arbitrarily if there is no conflict.

Steps shown in a flowchart of the drawings may be executed in a computer system such as a set of computer-executable instructions. In addition, although a logical sequence is shown in the flowchart, in some cases, the steps shown or described may be performed in a sequence different from the logical sequence.

In a data center application scenario, there are two situations of tunnel splicing. One situation is that tunnels of the same type are spliced at an egress gateway, and the other situation is that tunnels of different types are spliced at an egress gateway.

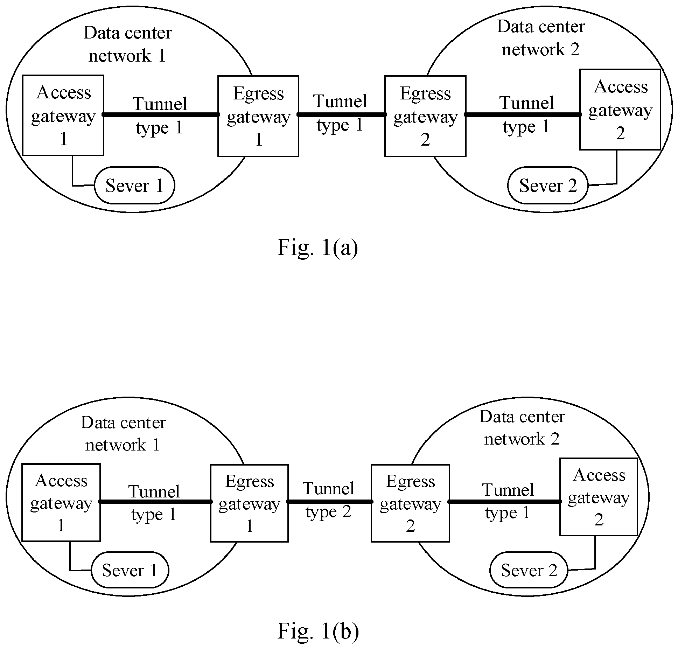

Fig. 1(a) is a topological schematic diagram of splicing for tunnels of the same type at an egress gateway. As shown in Fig. 1(a), the egress gateway connects two tunnels of the same type. For example, a type of a network tunnel internally overlaid in a data center (DC) is a tunnel type 1, and a type of a tunnel between DCs is still the tunnel type 1. However, in this case, the egress gateway needs to terminate an original tunnel before re-encapsulating a new tunnel, so it is still called tunnel splicing. At this time, it is also necessary to support transmission of IOAM information between tunnels.

Fig. 1(b) is a topological schematic diagram of splicing for tunnels of different types at an egress gateway. As shown in Fig. 1(b), the egress gateway connects two tunnels of different types. For example, a type of a network tunnel internally overlaid in a DC is the tunnel type 1, and a type of a tunnel between DCs is a tunnel type 2. In this scenario, when nodes within two DCs need to perform tunnel splicing at egress gateways of the DCs while the nodes are transmitting IOAM messages across DCs, it is necessary to support transmission of IOAM information between different tunnels while the tunnel splicing is performed.

It should be noted that the embodiments of the present application use a data center network as an example to illustrate the scenario of tunnel splicing, but in fact, the embodiments of the present application are not limited to being applied to the data center network, and are applicable to all network scenarios that include the tunnel splicing. In addition, the embodiments of the present application are not limited to tunnel splicing between two networks. Tunnel splicing within the same network and tunnel splicing among more than two networks are also within the protection scope of the embodiments of the present application.

In the related art, if tunnel termination is occurred during transmission of IOAM information, the IOAM information is discarded, so that the IOAM information is lost during the transmission, and the IOAM information cannot be continuously obtained to provide decision-making guidance for the network.

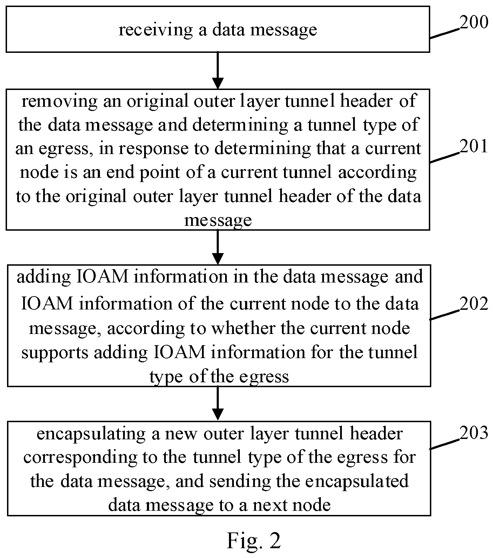

Referring to Fig. 2, the embodiments of the present application provide a processing method for IOAM information, including the following steps.

In step 200, a data message is received.

In step 201, an original outer layer tunnel header of the data message is removed and a tunnel type of an egress is determined, in response to determining that a current node is an end point of a current tunnel according to the original outer layer tunnel header of the data message.

In the embodiments of the present application, egress tunnel encapsulation information may be obtained by looking up a forwarding table according to an inner layer message header, and the tunnel type of the egress may be determined according to a tunnel characteristic field in the egress tunnel encapsulation information.

An egress tunnel type may be stored in a custom field in the egress tunnel encapsulation information, and the tunnel type of the egress may be determined according to the egress tunnel type in the egress tunnel encapsulation information. Alternatively, the tunnel type of the egress may be determined according to other existing fields in the egress tunnel encapsulation information.

In the embodiments of the present application, in a case where the original outer layer tunnel header of the data message includes IOAM information, before removing the outer layer tunnel header of the data message, the method further includes: the IOAM information is obtained from the original outer layer tunnel header of the data message; and the obtained IOAM information is buffered, or the obtained IOAM information and IOAM information of the current node are buffered.

In step 202, IOAM information in the data message and the IOAM information of the current node are added to the data message, according to whether the current node supports adding IOAM information for the tunnel type of the egress.

In the embodiments of the present application, adding the IOAM information in the data message and the IOAM information of the current node to the data message, according to whether the current node supports adding IOAM information for the tunnel type of the egress, includes at least one of followings: the IOAM information in the original outer layer tunnel header of the data message and the IOAM information of the current node are added to the inner layer message header of the data message, in response to determining that the current node does not support adding IOAM information for the tunnel type of the egress; and the IOAM information in the original outer layer tunnel header or the inner layer message header of the data message and the IOAM information of the current node are added to a new outer layer tunnel header of the data message corresponding to the tunnel type of the egress, in response to determining that the current node supports adding IOAM information for the tunnel type of the egress.

In the embodiments of the present application, determining whether the current node supports adding IOAM information for the tunnel type of the egress, includes at least one of followings: whether the current node supports adding IOAM information for the tunnel type of the egress is determined according to a pre-configured tunnel type that supports adding IOAM information; as an implementation, in a case where the pre-configured tunnel type that supports adding IOAM information includes the tunnel type of the egress of the current node, it is determined that the current node supports adding IOAM information for the tunnel type of the egress; and in a case where the pre-configured tunnel type that supports adding IOAM information does not include the tunnel type of the egress of the current node, it is determined that the current node does not support adding IOAM information for the tunnel type of the egress; and the pre-configured tunnel type that supports adding IOAM information may be manually configured; whether the current node supports adding IOAM information for the tunnel type of the egress is determined according to a pre-configured tunnel type that does not support adding IOAM information; as an implementation, in a case where the pre-configured tunnel type that does not support adding IOAM information includes the tunnel type of the egress of the current node, it is determined that the current node does not support adding IOAM information for the tunnel type of the egress; and in a case where the pre-configured tunnel type that does not support adding IOAM information does not include the tunnel type of the egress of the current node, it is determined that the current node supports adding IOAM information for the tunnel type of the egress; and the pre-configured tunnel type that does not support adding IOAM information may be manually configured; or whether the current node supports adding IOAM information for the tunnel type of the egress is determined according to a message type specified in draft-brockners-inband-oam-transport or draft-brockners-ippm-ioam-geneve of an IOAM draft; as an implementation, in a case where the message type specified in the IOAM draft includes a message type of the data message, it is determined that the current node supports adding IOAM information for the tunnel type of the egress; and in a case where the message type specified in the IOAM draft does not include the message type of the data message, it is determined that the current node does not support adding IOAM information for the tunnel type of the egress.

In the embodiments of the present application, adding the IOAM information in the original outer layer tunnel header of the data message and the IOAM information of the current node to the inner layer message header of the data message, includes: in a case where the IOAM information in the outer layer tunnel header of the data message is buffered in step 201, the buffered IOAM information and the IOAM information of the current node are added to the inner layer message header of the data message; or in a case where the IOAM information in the outer layer tunnel header of the data message and the IOAM information of the current node are buffered in step 201, the buffered IOAM information is added to the inner layer message header of the data message.

In an implementation of the present application, a specific position of adding the IOAM information to the inner layer message header may be customized, such as customized private User Datagram Protocol (UDP) and Transmission Control Protocol (TCP) port numbers.

In another implementation of the present application, the specific position of adding the IOAM information to the inner layer message header may be defined according to message formats of various types of messages carrying IOAM information in draft-brockners-inband-oam-transport of the IOAM draft.

According to the embodiments of the present application, when the current node is the end point of the current tunnel and the current node does not support adding IOAM information for the tunnel type of the egress, the IOAM information in the original outer layer tunnel header of the data message and the IOAM information of the current node are added to the inner layer message header of the data message, which realizes transmission of the IOAM information in a tunnel splicing scenario, and avoids loss of the IOAM information caused by ending of the tunnel, thereby continuously obtaining the IOAM information to provide the network with decision-making guidance.

A specific position of adding the IOAM information to the new outer layer tunnel header of the data message may be defined according to message formats of various types of messages carrying IOAM information in draft-brockners-inband-oam-transport or draft-brockners-ippm-ioam-geneve of the IOAM draft.

In step 203, the new outer layer tunnel header corresponding to the tunnel type of the egress is encapsulated for the data message, and the encapsulated data message is sent to a next node.

According to the embodiments of the present application, when the current node is the end point of the current tunnel, the IOAM information in the data message and the IOAM information of the current node are added to the data message according to whether the current node supports adding IOAM information for the tunnel type of the egress, which realizes the transmission of the IOAM information in the tunnel splicing scenario, and avoids the loss of the IOAM information caused by the ending of the tunnel, thereby continuously obtaining the IOAM information to provide the network with the decision-making guidance.

In the embodiments of the present application, in a case where the current node is determined not to be the end point of the current tunnel according to the original outer layer tunnel header of the data message, the method may further include at least one of followings: the IOAM information of the current node is added to the original outer layer tunnel header of the data message and the data message is sent to the next node, in response to the original outer layer tunnel header of the data message including the IOAM information; and the data message is sent to the next node, in response to the original outer layer tunnel header of the data message not including the IOAM information.

A specific implementation process of the embodiments of the present application is described in detail below through specific examples, and the examples provided are not used to limit the protection scope of the processing method for IOAM information according to the embodiments of the present application.

### Example One

In this example, as shown in Fig. 1(b), an egress gateway 1 of a data center network 1 and an egress gateway 2 of a data center network 2 are respectively spliced with tunnels of different types, and the egress gateway 1 does not support adding IOAM information for a tunnel type 2. The method includes the following steps.

In step 300, the egress gateway 1 receives a data message carrying IOAM information sent from a direction of an access gateway 1, an original outer layer tunnel header is encapsulated as a tunnel header corresponding to a tunnel type 1, and the original outer layer tunnel header carries the IOAM information.

In this step, presence of other network device node between the access gateway 1 and the egress gateway 1 is also within the protection scope of the embodiments of the present application.

In step 301, the egress gateway 1 determines whether the egress gateway 1 is an end point of a current tunnel (i.e., a tunnel of the tunnel type 1) according to the original outer layer tunnel header of the data message; in a case where the egress gateway 1 is determined to be the end point of the current tunnel according to the original outer layer tunnel header of the data message, the egress gateway 1 obtains the IOAM information from the original outer layer tunnel header of the data message; and the egress gateway 1 buffers the obtained IOAM information, or buffers the obtained IOAM information and IOAM information of the egress gateway 1.

In step 302, the egress gateway 1 removes the original outer layer tunnel header of the data message, and determines that an egress is a tunnel of the tunnel type 2 by looking up a forwarding table according to an inner layer message header.

In step 303, the egress gateway 1 determines whether the egress gateway 1 supports adding IOAM information for the tunnel type 2; in a case where the egress gateway 1 does not support adding IOAM information for the tunnel type 2, the egress gateway 1 adds the buffered IOAM information, or adds the buffered IOAM information and the IOAM information of the egress gateway 1, to the inner layer message header; and the egress gateway 1 encapsulates a new outer layer tunnel header corresponding to the tunnel type 2 in an outer layer and sends the encapsulated data message.

In step 304, during a process of the data message passing through a tunnel between the egress gateway 1 and the egress gateway 2, a network node through which the data message passes no longer adds IOAM information.

In step 305, the egress gateway 2 receives the data message carrying the IOAM information sent from a direction of the egress gateway 1, the original outer layer tunnel header is encapsulated as a tunnel header corresponding to the tunnel type 2, and the original outer layer tunnel header does not carry the IOAM information.

In this step, the presence of other network device node between the egress gateway 1 and the egress gateway 2 is also within the protection scope of the embodiments of the present application.

In step 306, the egress gateway 2 determines whether the egress gateway 2 is an end point of a current tunnel (i.e., a tunnel of the tunnel type 2) according to the original outer layer tunnel header of the data message; and in a case where the egress gateway 2 is determined to be the end point of the current tunnel according to the original outer layer tunnel header of the data message, the egress gateway 2 removes the original outer layer tunnel header of the data message, and determines that an egress is the tunnel of the tunnel type 1 by looking up the forwarding table according to the inner layer message header.

In step 307, the egress gateway 2 determines whether the egress gateway 2 supports adding IOAM information for the tunnel type 1; in a case where the egress gateway 2 supports adding IOAM information for the tunnel type 1, when encapsulating the new outer layer tunnel header corresponding to the tunnel type 1 in the outer layer, the egress gateway 2 obtains the IOAM information from the inner layer message header, and adds the obtained IOAM information and IOAM information of the egress gateway 2 to the new outer layer tunnel header; and the egress gateway 2 sends the data message encapsulated with the new outer layer tunnel header.

### Example Two

In this example, as shown in Fig. 1(b), an egress gateway 1 of a data center network 1 and an egress gateway 2 of a data center network 2 are respectively spliced with tunnels of different types, and the egress gateway 1 supports adding IOAM information for a tunnel type 2. The method includes the following steps.

In step 400, the egress gateway 1 receives a data message carrying IOAM information sent from a direction of an access gateway 1, an original outer layer tunnel header is encapsulated as a tunnel header corresponding to a tunnel type 1, and the original outer layer tunnel header carries the IOAM information.

In this step, presence of other network device node between the access gateway 1 and the egress gateway 1 is also within the protection scope of the embodiments of the present application.

In step 401, the egress gateway 1 determines whether the egress gateway 1 is an end point of a current tunnel (i.e., a tunnel of the tunnel type 1) according to the original outer layer tunnel header of the data message; in a case where the egress gateway 1 is determined to be the end point of the current tunnel according to the original outer layer tunnel header of the data message, the egress gateway 1 obtains the IOAM information from the original outer layer tunnel header of the data message; and the egress gateway 1 buffers the obtained IOAM information, or buffers the obtained IOAM information and IOAM information of the egress gateway 1.

In step 402, the egress gateway 1 removes the original outer layer tunnel header of the data message, and determines that an egress is a tunnel of the tunnel type 2 by looking up a forwarding table according to an inner layer message header.

In step 403, the egress gateway 1 determines whether the egress gateway 1 supports adding IOAM information for the tunnel type 2; in a case where the egress gateway 1 supports adding IOAM information for the tunnel type 2, when encapsulating a new outer layer tunnel header corresponding to tunnel type 2 in an outer layer, the egress gateway 1 adds the buffered IOAM information, or adds the buffered IOAM information and the IOAM information of the egress gateway 1, to the new outer layer tunnel header; and the egress gateway 1 sends the data message encapsulated with the new outer layer tunnel header.

In step 404, during a process of the data message passing through a tunnel between the egress gateway 1 and the egress gateway 2, a network node through which the data message passes continues to add IOAM information.

In step 405, the egress gateway 2 receives the data message carrying the IOAM information sent from a direction of the egress gateway 1, the original outer layer tunnel header is encapsulated as a tunnel header corresponding to the tunnel type 2, and the original outer layer tunnel header carries the IOAM information.

In this step, presence of other network device node between the egress gateway 1 and the egress gateway 2 is also within the protection scope of the embodiments of the present application.

In step 406, the egress gateway 2 determines whether the egress gateway 2 is an end point of a current tunnel (i.e., a tunnel of the tunnel type 2) according to the original outer layer tunnel header of the data message; and in a case where the egress gateway 2 is determined to be the end point of the current tunnel according to the original outer layer tunnel header of the data message, the egress gateway 2 obtains the IOAM information from the original outer layer tunnel header of the data message; the egress gateway 2 buffers the obtained IOAM information, or buffers the obtained IOAM information and IOAM information of the egress gateway 2; and the egress gateway 2 removes the original outer layer tunnel header of the data message, and determines that an egress is the tunnel of the tunnel type 1 by looking up the forwarding table according to the inner layer message header.

In step 407, the egress gateway 2 determines whether the egress gateway 2 supports adding IOAM information for the tunnel type 1; in a case where the egress gateway 2 supports adding IOAM information for the tunnel type 1, when encapsulating the new outer layer tunnel header corresponding to tunnel type 1 in the outer layer, the egress gateway 2 adds the obtained IOAM information, or adds the obtained IOAM information and the IOAM information of the egress gateway 2, to the new outer layer tunnel header; and the egress gateway 2 sends the data message encapsulated with the new outer layer tunnel header.

### Example Three

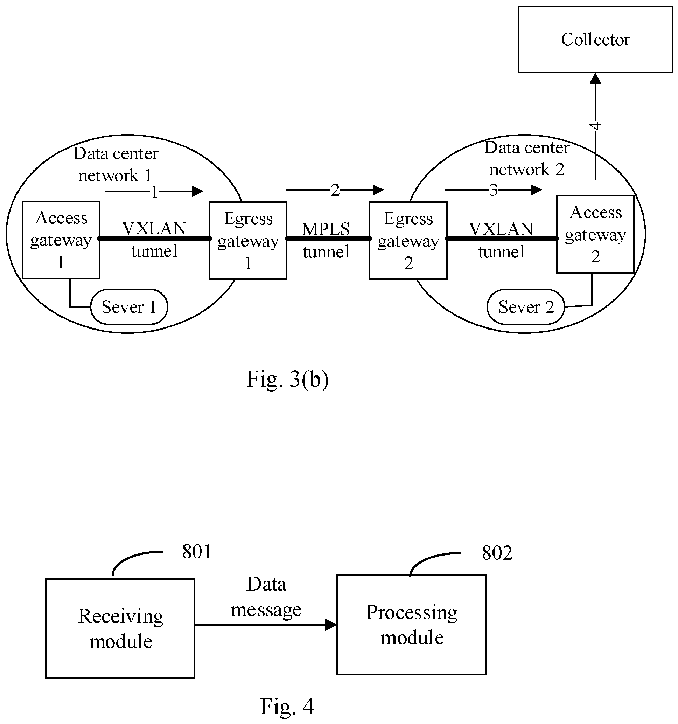

In this example, as shown in Fig. 3(b), an egress gateway 1 of a data center network 1 and an egress gateway 2 of a data center network 2 are respectively spliced with tunnels of different types. That is, a type of a tunnel between an access gateway and an egress gateway is a VXLAN tunnel type, a type of a tunnel between egress gateways is a Multi-Protocol Label Switching (MPLS) tunnel type, and the egress gateway 1 does not support adding IOAM information for an MPLS tunnel. The method includes the followings.

In step 500, the egress gateway 1 receives a data message carrying IOAM information sent from a direction of an access gateway 1, an original outer layer tunnel header is encapsulated as a tunnel header corresponding to the VXLAN tunnel type, and the original outer layer tunnel header carries the IOAM information.

In this step, presence of other network device node between the access gateway 1 and the egress gateway 1 is also within the protection scope of the embodiments of the present application.

In step 501, the egress gateway 1 determines whether the egress gateway 1 is an end point of a current tunnel (i.e., a tunnel of the VXLAN tunnel type) according to the original outer layer tunnel header of the data message; in a case where the egress gateway 1 is determined to be the end point of the current tunnel according to the original outer layer tunnel header of the data message, the egress gateway 1 obtains the IOAM information from the original outer layer tunnel header of the data message; and the egress gateway 1 buffers the obtained IOAM information, or buffers the obtained IOAM information and IOAM information of the egress gateway 1.

In step 502, the egress gateway 1 removes the original outer layer tunnel header of the data message, and determines that an egress is a MPLS tunnel type by looking up a forwarding table according to an inner layer message header.

In step 503, the egress gateway 1 determines whether the egress gateway 1 supports adding IOAM information for the MPLS tunnel type; in a case where the egress gateway 1 does not support adding IOAM information for the MPLS tunnel type, the egress gateway 1 adds the buffered IOAM information, or adds the buffered IOAM information and the IOAM information of the egress gateway 1, to the inner layer message header; and the egress gateway 1 sends the data message after encapsulating a new outer layer tunnel header corresponding to the MPLS tunnel type in an outer layer.

In step 504, when the data message passes through a tunnel between the egress gateway 1 and the egress gateway 2, an intermediate network node performs MPLS forwarding, and the network node through which the data message passes no longer adds IOAM information.

In step 505, the egress gateway 2 receives the data message carrying the IOAM information sent from a direction of the egress gateway 1, the original outer layer tunnel header is encapsulated as a tunnel header corresponding to the MPLS tunnel type, and the original outer layer tunnel header does not carry the IOAM information.

In this step, presence of other network device node between the egress gateway 1 and the egress gateway 2 is also within the protection scope of the embodiments of the present application.

In step 506, the egress gateway 2 determines whether the egress gateway 2 is an end point of a current tunnel (i.e., a tunnel of the MPLS tunnel type) according to the original outer layer tunnel header of the data message; and in a case where the egress gateway 2 is determined to be the end point of the current tunnel according to the original outer layer tunnel header of the data message, the egress gateway 2 removes the original outer layer tunnel header of the data message, and determines that an egress is the tunnel of the VXLAN tunnel type by looking up the forwarding table according to the inner layer message header.

In step 507, the egress gateway 2 determines whether the egress gateway 2 supports adding IOAM information for the VXLAN tunnel type; in a case where the egress gateway 2 supports adding IOAM information for the VXLAN tunnel type, when encapsulating a new outer layer tunnel header corresponding to the VXLAN tunnel type in the outer layer, the egress gateway 2 obtains the IOAM information from the inner layer message header, and adds the obtained IOAM information and IOAM information of the egress gateway 2 to the new outer layer tunnel header; and the egress gateway 2 sends the data message encapsulated with the new outer layer tunnel header.

In step 508, during a process of the data message passing through a VXLAN tunnel between the egress gateway 2 and an access gateway 2, an intermediate network node adds its own IOAM information to an IOAM information part of the outer layer tunnel header (i.e., a VXLAN tunnel header).

In step 509, the access gateway 2 in the data center network 2 receives the data message encapsulated with the VXLAN tunnel header carrying the IOAM information sent from a direction of the egress gateway 2.

In this example, the access gateway 2 is an end point of IOAM. After removing the outer layer tunnel header and the inner layer message header of the data message, the access gateway 2 forwards the data message normally, and the data message is forwarded to a server 2.

In step 510, since the access gateway 2 is the end point of IOAM in this example, the access gateway 2 will obtain the IOAM information from the data message, add IOAM information of the access gateway 2, and send the IOAM information to a collector for processing through an agreed transmission method with the collector.

### Example Four

In this example, as shown in Fig. 3(b), an egress gateway 1 of a data center network 1 and an egress gateway 2 of a data center network 2 are respectively spliced with tunnels of different types. That is, a type of a tunnel between an access gateway and an egress gateway is a VXLAN tunnel type, a type of a tunnel between egress gateways is an MPLS tunnel type, and the egress gateway 1 supports adding IOAM information for an MPLS tunnel. The method includes the followings.

In step 600, the egress gateway 1 receives a data message carrying IOAM information sent from a direction of an access gateway 1, an original outer layer tunnel header is encapsulated as a tunnel header corresponding to the VXLAN tunnel type, and the original outer layer tunnel header carries the IOAM information.

In this step, presence of other network device node between the access gateway 1 and the egress gateway 1 is also within the protection scope of the embodiments of the present application.

In step 601, the egress gateway 1 determines whether the egress gateway 1 is an end point of a current tunnel (i.e., a tunnel of the VXLAN tunnel type) according to the original outer layer tunnel header of the data message; in a case where the egress gateway 1 is determined to be the end point of the current tunnel according to the original outer layer tunnel header of the data message, the egress gateway 1 obtains the IOAM information from the original outer layer tunnel header of the data message; and the egress gateway 1 buffers the obtained IOAM information, or buffers the obtained IOAM information and IOAM information of the egress gateway 1.

In step 602, the egress gateway 1 removes the original outer layer tunnel header of the data message, and determines that an egress is a MPLS tunnel type by looking up a forwarding table according to an inner layer message header.

In step 603, the egress gateway 1 determines whether the egress gateway 1 supports adding IOAM information for the MPLS tunnel type; in a case where the egress gateway 1 supports adding IOAM information for the MPLS tunnel type, when encapsulating a new outer layer tunnel header corresponding to the MPLS tunnel type in an outer layer, the egress gateway 1 adds the buffered IOAM information, or adds the buffered IOAM information and the IOAM information of the egress gateway 1, to the new outer layer tunnel header; and the egress gateway 1 sends the data message encapsulated with the new outer layer tunnel header.

In step 604, during a process that the data message passes through a tunnel between the egress gateway 1 and the egress gateway 2, an intermediate network node performs MPLS forwarding, and the network node through which the data message passes adds its own IOAM information to the outer layer tunnel header.

In step 605, the egress gateway 2 receives the data message carrying IOAM information sent from a direction of the egress gateway 1, the original outer layer tunnel header is encapsulated as a tunnel header corresponding to the MPLS tunnel type, and the original outer layer tunnel header carries the IOAM information.

In this step, presence of other network device node between the egress gateway 1 and the egress gateway 2 is also within the protection scope of the embodiments of the present application.

In step 606, the egress gateway 2 determines whether the egress gateway 2 is an end point of a current tunnel (i.e., a tunnel of the MPLS tunnel type) according to the original outer layer tunnel header of the data message; and in a case where the egress gateway 2 is determined to be the end point of the current tunnel according to the original outer layer tunnel header of the data message, the egress gateway 2 obtains the IOAM information from the original outer layer tunnel header; the egress gateway 2 buffers the obtained IOAM information, or buffers the obtained IOAM information and IOAM information of the egress gateway 2; and the egress gateway 2 removes the original outer layer tunnel header of the data message, and determines that an egress is the tunnel of the VXLAN tunnel type by looking up the forwarding table according to the inner layer message header.

In step 607, the egress gateway 2 determines whether the egress gateway 2 supports adding IOAM information for the VXLAN tunnel type; in a case where the egress gateway 2 supports adding IOAM information for the VXLAN tunnel type, the egress gateway 2 adds the buffered IOAM information or adds the buffered IOAM information and the IOAM information of the egress gateway 2, to the new outer layer tunnel header, and encapsulates the new outer layer tunnel header corresponding to the VXLAN tunnel type in an outer layer of the data message; and the egress gateway 2 sends the data message encapsulated with the new outer layer tunnel header.

In step 608, during a process of the data message passing through a VXLAN tunnel between the egress gateway 2 and an access gateway 2, an intermediate network node adds its own IOAM information to an IOAM information part of the outer layer tunnel header (i.e., a VXLAN tunnel header).

In step 609, the access gateway 2 in the data center network 2 receives the data message encapsulated with the VXLAN tunnel header carrying the IOAM information sent from a direction of the egress gateway 2.

In this example, the access gateway 2 is an end point of IOAM. After removing the outer layer tunnel header and the inner layer message header of the data message, the access gateway 2 forwards the data message normally, and the data message is forwarded to a server 2.

In step 610, since the access gateway 2 is the end point of IOAM in this example, the access gateway 2 will obtain the IOAM information from the data message, add IOAM information of the access gateway 2, and send the IOAM information to a collector for processing through an agreed transmission method with the collector.

### Example Five

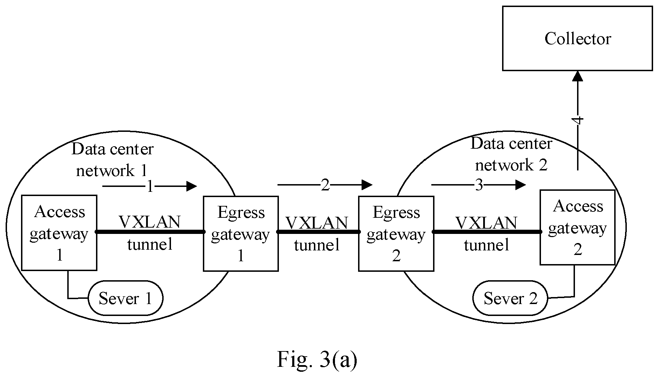

In this example, as shown in Fig. 3(a), an egress gateway 1 of a data center network 1 and an egress gateway 2 of a data center network 2 are respectively spliced with tunnels of the same type. That is, a type of a tunnel between an access gateway and an egress gateway is a VXLAN tunnel type, a type of a tunnel between egress gateways is still the VXLAN tunnel type, and the egress gateway 1 supports adding IOAM information for the VXLAN tunnel type.

The method includes the followings.

In step 700, the egress gateway 1 receives a data message carrying IOAM information sent from a direction of an access gateway 1, an original outer layer tunnel header is encapsulated as a tunnel header corresponding to the VXLAN tunnel type, and the original outer layer tunnel header carries the IOAM information.

In this step, presence of other network device node between the access gateway 1 and the egress gateway 1 is also within the protection scope of the embodiments of the present application.

In step 701, the egress gateway 1 determines whether the egress gateway 1 is an end point of a current tunnel (i.e., a tunnel of the VXLAN tunnel type) according to the original outer layer tunnel header of the data message; in a case where the egress gateway 1 is determined to be the end point of the current tunnel according to the original outer layer tunnel header of the data message, the egress gateway 1 obtains the IOAM information from the original outer layer tunnel header of the data message; and the egress gateway 1 buffers the obtained IOAM information, or buffers the obtained IOAM information and IOAM information of the egress gateway 1.

In step 702, the egress gateway 1 removes the original outer layer tunnel header of the data message, determines that an egress is still the VXLAN tunnel type by looking up a forwarding table according to an inner layer message header, and thus, it is needed to encapsulate a tunnel header corresponding to a new VXLAN tunnel type.

In step 703, the egress gateway 1 determines whether the egress gateway 1 supports adding IOAM information for the VXLAN tunnel type; in a case where the egress gateway 1 supports adding IOAM information for the VXLAN tunnel type, when encapsulating a new outer layer tunnel header corresponding to the VXLAN tunnel type in an outer layer, the egress gateway 1 adds the buffered IOAM information, or adds the buffered IOAM information and the IOAM information of the egress gateway 1, to the new outer layer tunnel header; and the egress gateway 1 sends the data message encapsulated with the new outer layer tunnel header.

In step 704, during a process that the data message passes through a tunnel between the egress gateway 1 and the egress gateway 2, an intermediate network node performs VXLAN forwarding, and the passed network node adds its own IOAM information to the outer layer tunnel header.

In step 705, the egress gateway 2 receives the data message carrying the IOAM information sent from a direction of the egress gateway 1, the original outer layer tunnel header is encapsulated as a tunnel header corresponding to the VXLAN tunnel type, and the original outer layer tunnel header carries the IOAM information.

In this step, presence of other network device node between the egress gateway 1 and the egress gateway 2 is also within the protection scope of the embodiments of the present application.

In step 706, the egress gateway 2 determines whether the egress gateway 2 is an end point of a current tunnel (i.e., a tunnel of the VXLAN tunnel type) according to the original outer layer tunnel header of the data message; and in a case where the egress gateway 2 is determined to be the end point of the current tunnel according to the original outer layer tunnel header of the data message, the egress gateway 2 obtains the IOAM information from the original outer layer tunnel header; the egress gateway 2 buffers the obtained IOAM information, or buffers the obtained IOAM information and IOAM information of the egress gateway 2; and the egress gateway 2 removes the original outer layer tunnel header of the data message, and determines that an egress is the tunnel of the VXLAN tunnel type by looking up the forwarding table according to the inner layer message header.

In step 707, the egress gateway 2 determines whether the egress gateway 2 supports adding IOAM information for the VXLAN tunnel type; in a case where the egress gateway 2 supports adding IOAM information for the VXLAN tunnel type, the egress gateway 2 adds the buffered IOAM information or adds the buffered IOAM information and the IOAM information of the egress gateway 2, to the new outer layer tunnel header, and encapsulates the tunnel header corresponding to the VXLAN tunnel type in a new outer layer of the data message; and the egress gateway 2 sends the data message encapsulated with the new outer layer tunnel header.

In step 708, during a process of the data message passing through a VXLAN tunnel between the egress gateway 2 and an access gateway 2, an intermediate network node adds its own IOAM information to an IOAM information part of the outer layer tunnel header (i.e., a VXLAN tunnel header).

In step 709, the access gateway 2 in the data center network 2 receives the data packet encapsulated with the VXLAN tunnel header carrying the IOAM information sent from a direction of the egress gateway 2.

In this example, the access gateway 2 is an end point of IOAM. After removing the outer layer tunnel header and the inner layer message header of the data message, the access gateway 2 forwards the data message normally, and the data message is forwarded to a server 2.

In step 710, since the access gateway 2 is the end point of IOAM in this example, the access gateway 2 will obtain the IOAM information from the data message, add IOAM information of the access gateway 2, and send the IOAM information to a collector for processing through an agreed transmission method with the collector.

Referring to Fig. 4, the embodiments of the present application provide a processing device for IOAM information, including the followings.

A receiving module 801 is configured to receive a data message.

A processing module 802 is configured to: remove an original outer layer tunnel header of the data message and determine a tunnel type of an egress, in response to determining that a current node is an end point of a current tunnel according to the original outer layer tunnel header of the data message; add IOAM information in the data message and IOAM information of the current node to the data message according to whether the current node supports adding IOAM information for the tunnel type of the egress; and encapsulate a new outer layer tunnel header corresponding to the tunnel type of the egress for the data message, and send the encapsulated data message to a next node.

In an optional embodiment of the present application, the processing module 802 may obtain egress tunnel encapsulation information by looking up a forwarding table according to an inner layer message header, and determine the tunnel type of the egress according to a tunnel characteristic field in the egress tunnel encapsulation information.

The processing module 802 may store an egress tunnel type in a custom field in the egress tunnel encapsulation information, and determine the tunnel type of the egress according to the egress tunnel type in the egress tunnel encapsulation information; or determine the tunnel type of the egress according to other existing fields in the egress tunnel encapsulation information.

In the embodiments of the present application, the processing module 802 is configured to use at least one of the following operations to implement adding the IOAM information in the data message and the IOAM information of the current node to the data message according to whether the current node supports adding IOAM information for the tunnel type of the egress: the IOAM information in the original outer layer tunnel header of the data message and the IOAM information of the current node are added to the inner layer message header of the data message, in response to determining that the current node does not support adding IOAM information for the tunnel type of the egress; and the IOAM information in the original outer layer tunnel header or the inner layer message header of the data message and the IOAM information of the current node are added to a new outer layer tunnel header of the data message corresponding to the tunnel type of the egress, in response to determining that the current node supports adding IOAM information for the tunnel type of the egress.

In the embodiments of the present application, the processing module 802 is further configured to: obtain the IOAM information from the original outer layer tunnel header of the data message, buffer the obtained IOAM information, and add the buffered IOAM information and the IOAM information of the current node to the inner layer message header of the data message; or obtain the IOAM information from the original outer layer tunnel header of the data message, buffer the obtained IOAM information and the IOAM information of the current node, and add the buffered IOAM information to the inner layer message header of the data message.

In the embodiments of the present application, the processing module 802 is configured to use at least one of the following operations to implement determining whether the current node supports adding IOAM information for the tunnel type of the egress: whether the current node supports adding IOAM information for the tunnel type of the egress is determined according to a pre-configured tunnel type that supports adding IOAM information; as an implementation, in a case where the pre-configured tunnel type that supports adding IOAM information includes the tunnel type of the egress of the current node, it is determined that the current node supports adding IOAM information for the tunnel type of the egress; and in a case where the pre-configured tunnel type that supports adding IOAM information does not include the tunnel type of the egress of the current node, it is determined that the current node does not support adding IOAM information for the tunnel type of the egress; and the pre-configured tunnel type that supports adding IOAM information may be manually configured; whether the current node supports adding IOAM information for the tunnel type of the egress is determined according to a pre-configured tunnel type that does not support adding IOAM information; as an implementation, in a case where the pre-configured tunnel type that does not support adding IOAM information includes the tunnel type of the egress of the current node, it is determined that the current node does not support adding IOAM information for the tunnel type of the egress; and in a case where the pre-configured tunnel type that does not support adding IOAM information does not include the tunnel type of the egress of the current node, it is determined that the current node supports adding IOAM information for the tunnel type of the egress; and the pre-configured tunnel type that does not support adding IOAM information may be manually configured; or whether the current node supports adding IOAM information for the tunnel type of the egress is determined according to a message type specified in draft-brockners-inband-oam-transport or draft-brockners-ippm-ioam-geneve of an IOAM draft; as an implementation, in a case where the message type specified in the IOAM draft includes a message type of the data message, it is determined that the current node supports adding IOAM information for the tunnel type of the egress; and in a case where the message type specified in the IOAM draft does not include the message type of the data message, it is determined that the current node does not support adding IOAM information for the tunnel type of the egress.

According to the embodiments of the present application, when the current node is the end point of the current tunnel and the current node does not support adding IOAM information for the tunnel type of the egress, the IOAM information in the original outer layer tunnel header of the data message and the IOAM information of the current node are added to the inner layer message header of the data message, which realizes transmission of the IOAM information in a tunnel splicing scenario, and avoids loss of the IOAM information caused by ending of the tunnel, thereby continuously obtaining the IOAM information to provide the network with decision-making guidance.

According to the embodiments of the present application, when the current node is the end point of the current tunnel and the current node supports adding IOAM information for the tunnel type of the egress, the IOAM information in the outer layer tunnel header or the inner layer message header of the data message and the IOAM information of the current node are added to the outer layer tunnel header of the data message, which realizes the transmission of the IOAM information in the tunnel splicing scenario, and avoids the loss of the IOAM information caused by the ending of the tunnel, thereby continuously obtaining the IOAM information to provide the network with decision-making guidance.

In the embodiments of the present application, the processing module 802 is further configured to, in a case where the current node is determined not to be the end point of the current tunnel according to the original outer layer tunnel header of the data message, perform at least one of the followings: the IOAM information of the current node is added to the original outer layer tunnel header of the data message and the data message is sent to the next node, in response to the original outer layer tunnel header of the data message including the IOAM information; and the data message is sent to the next node, in response to the original outer layer tunnel header of the data message not including the IOAM information.

A specific implementation process of the above-mentioned processing device for IOAM information is the same as that of the processing method for IOAM information in the foregoing embodiments, and will not be repeated herein.

The embodiments of the present application provide a processing device for IOAM information, which includes a processor and a computer-readable storage medium. The computer-readable storage medium stores an instruction, and when the instruction is executed by the processor, any above-mentioned processing method for IOAM information is realized.

The embodiments of the present application provide a computer-readable storage medium having a computer program stored thereon. When the computer program is executed by a processor, steps of any above-mentioned processing method for IOAM information is realized.

It should be understood by those having ordinary skill in the art that all or some of the steps in the method disclosed above, and functional modules/units in, systems, and devices may be implemented as software, firmware, hardware, or suitable combinations thereof. If implemented as hardware, the division among the functional modules/units stated above does not necessarily correspond to the division of physical components. For example, one physical component may have a plurality of functions, or one function or step may be performed through cooperation of several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those having ordinary skill in the art, the term "computer storage media" includes volatile/nonvolatile and removable/non-removable media used in any method or technology for storing information (such as computer-readable instructions, data structures, program modules and other data). The computer storage media include, but are not limited to, RAM, ROM, EEPROM, flash memory or other memory techniques, CD-ROM, digital versatile disk (DVD) or other optical discs, magnetic cassette, magnetic tape, magnetic disk or other magnetic storage devices, or any other media which can be used to store the desired information and can be accessed by a computer. In addition, it is well known by those having ordinary skill in the art that the communication media generally include computer-readable instructions, data structures, program modules or other data in a modulated data signal, such as a carrier wave or other transmission mechanism, and may include any information delivery media.

In the case of no conflict, the methods disclosed in the several method embodiments provided by the present application can be combined arbitrarily to obtain new method embodiments.

In the case of no conflict, the features disclosed in the several product embodiments provided by the present application can be combined arbitrarily to obtain new product embodiments.

In the case of no conflict, the features disclosed in the several method or device embodiments provided by the present application can be combined arbitrarily to obtain new method embodiments or device embodiments.

The patent protection scope of the embodiments of the present application shall be subject to the scope defined by the appended claims.

## Claims

1. A processing method for In-band Operations Administration and Maintenance, IOAM, information, applied in a tunnel splicing scenario, wherein tunnels are spliced at an egress, comprising:
receiving (200) a data message;
removing (201) an original outer layer tunnel header of the data message and determining a tunnel type of an egress, in response to determining that a current node is an end point of a current tunnel according to the original outer layer tunnel header of the data message;
adding (202) IOAM information in the data message and IOAM information of the current node to the data message, according to whether the current node supports adding IOAM information for the tunnel type of the egress; and
encapsulating (203) a new outer layer tunnel header corresponding to the tunnel type of the egress for the data message, and sending the encapsulated data message to a next node,
wherein adding (202) the IOAM information in the data message and the IOAM information of the current node to the data message, according to whether the current node supports adding IOAM information for the tunnel type of the egress, comprises at least one of followings:
adding IOAM information in the original outer layer tunnel header of the data message and the IOAM information of the current node to an inner layer message header of the data message, in response to determining that the current node does not support adding IOAM information for the tunnel type of the egress; and
adding the IOAM information in the original outer layer tunnel header or the inner layer message header of the data message and the IOAM information of the current node to the new outer layer tunnel header of the data message corresponding to the tunnel type of the egress, in response to determining that the current node supports adding IOAM information for the tunnel type of the egress,
wherein in a case of determining that the current node is not the end point of the current tunnel according to the original outer layer tunnel header of the data message, the method comprises at least one of followings:
adding the IOAM information of the current node to the original outer layer tunnel header of the data message and sending the data message to the next node, in response to the original outer layer tunnel header of the data message containing the IOAM information; and
sending the data message to the next node, in response to the original outer layer tunnel header of the data message not containing the IOAM information.

2. The processing method according to claim 1, before removing (201) the original outer layer tunnel header of the data message, further comprising:
obtaining the IOAM information from the original outer layer tunnel header of the data message, and buffering the obtained IOAM information; and
adding the IOAM information in the original outer layer tunnel header of the data message and the IOAM information of the current node to the inner layer message header of the data message, comprising:
adding the buffered IOAM information and the IOAM information of the current node to the inner layer message header of the data message.

3. The processing method according to claim 1, before removing (201) the original outer layer tunnel header of the data message, further comprising:
obtaining the IOAM information from the original outer layer tunnel header of the data message, and buffering the obtained IOAM information and the IOAM information of the current node; and
adding the IOAM information in the original outer layer tunnel header of the data message and the IOAM information of the current node to the inner layer message header of the data message, comprising:
adding the buffered IOAM information to the inner layer message header of the data message.

4. A processing device for In-band Operations Administration and Maintenance, IOAM, information, applied in a tunnel splicing scenario, wherein tunnels are spliced at an egress, comprising:
a receiving module (801), configured to receive a data message; and
a processing module (802), configured to remove an original outer layer tunnel header of the data message and determine a tunnel type of an egress, in response to determining that a current node is an end point of a current tunnel according to the original outer layer tunnel header of the data message; add IOAM information in the data message and IOAM information of the current node to the data message, according to whether the current node supports adding IOAM information for the tunnel type of the egress; and encapsulate a new outer layer tunnel header corresponding to the tunnel type of the egress for the data message, and send the encapsulated data message to a next node,
wherein the processing module (802) is configured to perform at least one of the following operations to implement adding the IOAM information in the data message and the IOAM information of the current node to the data message, according to whether the current node supports adding IOAM information for the tunnel type of the egress:
adding IOAM information in the original outer layer tunnel header of the data message and the IOAM information of the current node to an inner layer message header of the data message, in response to determining that the current node does not support adding IOAM information for the tunnel type of the egress; and
adding the IOAM information in the original outer layer tunnel header or the inner layer message header of the data message and the IOAM information of the current node to the new outer layer tunnel header of the data message corresponding to the tunnel type of the egress, in response to determining that the current node supports adding IOAM information for the tunnel type of the egress,
wherein in a case of determining that the current node is not the end point of the current tunnel according to the original outer layer tunnel header of the data message, the processing module (802) is configured to:
add the IOAM information of the current node to the original outer layer tunnel header of the data message and send the data message to the next node, in response to the original outer layer tunnel header of the data message containing the IOAM information; and
send the data message to the next node, in response to the original outer layer tunnel header of the data message not containing the IOAM information.

5. The processing device according to claim 4, wherein
before removing the original outer layer tunnel header of the data message, the processing module (802) is further configured to: obtain the IOAM information from the original outer layer tunnel header of the data message, and buffer the obtained IOAM information; and
the processing module (802) is configured to perform the following operation to implement adding the IOAM information in the original outer layer tunnel header of the data message and the IOAM information of the current node to the inner layer message header of the data message: adding the buffered IOAM information and the IOAM information of the current node to the inner layer message header of the data message.

6. The processing device according to claim 4, wherein
before removing the original outer layer tunnel header of the data message, the processing module (802) is further configured to: obtain the IOAM information from the original outer layer tunnel header of the data message, and buffer the obtained IOAM information and the IOAM information of the current node; and
the processing module (802) is configured to perform the following operation to implement adding the IOAM information in the original outer layer tunnel header of the data message and the IOAM information of the current node to the inner layer message header of the data message: adding the buffered IOAM information to the inner layer message header of the data message.

7. A computer-readable storage medium having a computer program stored thereon, wherein when the computer program is executed by a processor, all the steps of the processing method for IOAM information according to any one of claims 1 to 3 are realized.

## Patentansprüche

1. Verarbeitungsverfahren für In-Band-Operations-Administration and Maintenance (IOAM)-Informationen, angewandt in einem Tunnelspleißszenario, wobei Tunnel an einem Ausgang gespleißt werden, umfassend:
Empfangen (200) einer Datennachricht;
Entfernen (201) eines ursprünglichen Außenschicht-Tunnelkopfes der Datennachricht und Bestimmen eines Tunneltyps eines Ausgangs, als Reaktion auf die Bestimmung, dass ein aktueller Knoten ein Endpunkt eines aktuellen Tunnels gemäß dem ursprünglichen Außenschicht-Tunnelkopf der Datennachricht ist;
Hinzufügen (202) von IOAM-Informationen in der Datennachricht und von IOAM-Informationen des aktuellen Knotens zu der Datennachricht, je nachdem, ob der aktuelle Knoten das Hinzufügen von IOAM-Informationen für den Tunneltyp des Ausgangs unterstützt; und
Einkapseln (203) eines neuen Außenschicht-Tunnelkopfes, der dem Tunneltyp des Ausgangs für die Datennachricht entspricht, und Senden der eingekapselten Datennachricht an einen nächsten Knoten,
wobei das Hinzufügen (202) der IOAM-Informationen in der Datennachricht und der IOAM-Informationen des aktuellen Knotens zu der Datennachricht, je nachdem, ob der aktuelle Knoten das Hinzufügen von IOAM-Informationen für den Tunneltyp des Ausgangs unterstützt, mindestens eines der folgenden umfasst:
Hinzufügen von IOAM-Informationen in dem ursprünglichen Tunnelkopf der äußeren Schicht der Datennachricht und der IOAM-Informationen des aktuellen Knotens zu einem Nachrichtenkopf der inneren Schicht der Datennachricht als Reaktion auf die Feststellung, dass der aktuelle Knoten das Hinzufügen von IOAM-Informationen für den Tunneltyp des Ausgangs nicht unterstützt; und
Hinzufügen der IOAM-Informationen in dem ursprünglichen Außenschicht-Tunnelkopf oder dem Innenschicht-Nachrichtenkopf der Datennachricht und der IOAM-Informationen des aktuellen Knotens zu dem neuen Außenschicht-Tunnelkopf der Datennachricht, der dem Tunneltyp des Ausgangs entspricht, als Reaktion auf die Feststellung, dass der aktuelle Knoten das Hinzufügen von IOAM-Informationen für den Tunneltyp des Ausgangs unterstützt,
wobei in einem Fall des Feststellens, dass der aktuelle Knoten nicht der Endpunkt des aktuellen Tunnels gemäß dem ursprünglichen Außenschicht-Tunnelkopf der Datennachricht ist, das Verfahren mindestens eines der folgenden Schritte umfasst:
Hinzufügen der IOAM-Informationen des aktuellen Knotens zu dem ursprünglichen Außenschicht-Tunnelkopf der Datennachricht und Senden der Datennachricht an den nächsten Knoten als Reaktion darauf, dass der ursprüngliche Außenschicht-Tunnelkopf der Datennachricht die IOAM-Informationen enthält; und
Senden der Datennachricht an den nächsten Knoten als Reaktion darauf, dass der ursprüngliche Außenschicht-Tunnelkopf der Datennachricht die IOAM-Informationen nicht enthält.

2. Verarbeitungsverfahren nach Anspruch 1, das vor dem Entfernen (201) des ursprünglichen Außenschicht-Tunnelkopfes der Datennachricht ferner umfasst:
Gewinnen der IOAM-Informationen aus dem ursprünglichen Außenschicht-Tunnelkopf der Datennachricht und Puffern der gewonnenen IOAM-Informationen; und
Hinzufügen der IOAM-Informationen in dem ursprünglichen Außenschicht-Tunnelheader der Datennachricht und der IOAM-Informationen des aktuellen Knotens zu dem Innenschicht-Nachrichtenheader der Datennachricht, umfassend:
Hinzufügen der gepufferten IOAM-Informationen und der IOAM-Informationen des aktuellen Knotens zu dem Nachrichtenkopf der inneren Schicht der Datennachricht.

3. Verarbeitungsverfahren nach Anspruch 1, das vor dem Entfernen (201) des ursprünglichen Außenschicht-Tunnelkopfes der Datennachricht ferner umfasst:
Gewinnen der IOAM-Informationen aus dem ursprünglichen Außenschicht-Tunnelkopf der Datennachricht und Puffern der gewonnenen IOAM-Informationen und der IOAM-Informationen des aktuellen Knotens; und
Hinzufügen der IOAM-Informationen in dem ursprünglichen Tunnelkopf der äußeren Schicht der Datennachricht und der IOAM-Informationen des aktuellen Knotens zu dem Nachrichtenkopf der inneren Schicht der Datennachricht, umfassend:
Hinzufügen der gepufferten IOAM-Informationen zu dem Nachrichtenkopf der inneren Schicht der Datennachricht.

4. Verarbeitungsvorrichtung für In-Band-Operations-Administration and Maintenance (IOAM)-Informationen, die in einem Tunnelspleißszenario angewendet werden, wobei Tunnel an einem Ausgang gespleißt werden, umfassend:
ein Empfangsmodul (801), das so konfiguriert ist, dass es eine Datennachricht empfängt; und
ein Verarbeitungsmodul (802), das so konfiguriert ist, dass es einen ursprünglichen Außenschicht-Tunnelkopf der Datennachricht entfernt und einen Tunneltyp eines Ausgangs bestimmt, um zu bestimmen, dass ein aktueller Knoten ein Endpunkt eines aktuellen Tunnels gemäß dem ursprünglichen Außenschicht-Tunnelkopf der Datennachricht ist; Hinzufügen von IOAM-Informationen in der Datennachricht und von IOAM-Informationen des aktuellen Knotens zu der Datennachricht, je nachdem, ob der aktuelle Knoten das Hinzufügen von IOAM-Informationen für den Tunneltyp des Ausgangs unterstützt; und Einkapseln eines neuen Außenschicht-Tunnelkopfes, der dem Tunneltyp des Ausgangs entspricht, für die Datennachricht, und Senden der eingekapselten Datennachricht an einen nächsten Knoten,
wobei das Verarbeitungsmodul (802) so konfiguriert ist, dass es mindestens eine der folgenden Operationen ausführt, um das Hinzufügen der IOAM-Informationen in der Datennachricht und der IOAM-Informationen des aktuellen Knotens zu der Datennachricht zu implementieren, je nachdem, ob der aktuelle Knoten das Hinzufügen von IOAM-Informationen für den Tunneltyp des Ausgangs unterstützt:
Hinzufügen von IOAM-Informationen in dem ursprünglichen Tunnelkopf der äußeren Schicht der Datennachricht und der IOAM-Informationen des aktuellen Knotens zu einem Nachrichtenkopf der inneren Schicht der Datennachricht in Reaktion auf die Feststellung, dass der aktuelle Knoten das Hinzufügen von IOAM-Informationen für den Tunneltyp des Ausgangs nicht unterstützt; und
Hinzufügen der IOAM-Informationen in dem ursprünglichen Außenschicht-Tunnelkopf oder dem Innenschicht-Nachrichtenkopf der Datennachricht und der IOAM-Informationen des aktuellen Knotens zu dem neuen Außenschicht-Tunnelkopf der Datennachricht, der dem Tunneltyp des Ausgangs entspricht, als Reaktion auf die Feststellung, dass der aktuelle Knoten das Hinzufügen von IOAM-Informationen für den Tunneltyp des Ausgangs unterstützt,
wobei in einem Fall der Bestimmung, dass der aktuelle Knoten nicht der Endpunkt des aktuellen Tunnels gemäß dem ursprünglichen Außenschicht-Tunnelkopf der Datennachricht ist, das Verarbeitungsmodul (802) konfiguriert ist, um:
Hinzufügen der IOAM-Informationen des aktuellen Knotens zu dem ursprünglichen Außenschicht-Tunnelkopf der Datennachricht und Senden der Datennachricht an den nächsten Knoten als Reaktion darauf, dass der ursprüngliche Außenschicht-Tunnelkopf der Datennachricht die IOAM-Informationen enthält; und
Senden der Datennachricht an den nächsten Knoten als Antwort auf den ursprünglichen Außenschicht-Tunnelkopf der Datennachricht, der die IOAM-Informationen nicht enthält.

5. Die Verarbeitungsvorrichtung nach Anspruch 4, wobei
vor dem Entfernen des ursprünglichen Außenschicht-Tunnelkopfes der Datennachricht das Verarbeitungsmodul (802) ferner konfiguriert ist, um: die IOAM-Informationen aus dem ursprünglichen Außenschicht-Tunnelkopf der Datennachricht zu erhalten und die erhaltenen IOAM-Informationen zu puffern; und
das Verarbeitungsmodul (802) so konfiguriert ist, dass es die folgende Operation durchführt, um das Hinzufügen der IOAM-Informationen in dem ursprünglichen Außenschicht-Tunnelkopf der Datennachricht und der IOAM-Informationen des aktuellen Knotens zu dem Innenschicht-Nachrichtenkopf der Datennachricht zu implementieren: Hinzufügen der gepufferten IOAM-Informationen und der IOAM-Informationen des aktuellen Knotens zu dem Innenschicht-Nachrichtenkopf der Datennachricht.

6. Die Verarbeitungsvorrichtung nach Anspruch 4, wobei
vor dem Entfernen des ursprünglichen Außenschicht-Tunnelkopfes der Datennachricht das Verarbeitungsmodul (802) ferner konfiguriert ist, um: die IOAM-Informationen aus dem ursprünglichen Außenschicht-Tunnelkopf der Datennachricht zu erhalten und die erhaltenen IOAM-Informationen und die IOAM-Informationen des aktuellen Knotens zu puffern; und
das Verarbeitungsmodul (802) so konfiguriert ist, dass es die folgende Operation durchführt, um das Hinzufügen der IOAM-Informationen in dem ursprünglichen Tunnelkopf der äußeren Schicht der Datennachricht und der IOAM-Informationen des aktuellen Knotens zu dem Nachrichtenkopf der inneren Schicht der Datennachricht zu implementieren: Hinzufügen der gepufferten IOAM-Informationen zu dem Nachrichtenkopf der inneren Schicht der Datennachricht.

7. Computerlesbares Speichermedium mit einem darauf gespeicherten Computerprogramm, wobei, wenn das Computerprogramm von einem Prozessor ausgeführt wird, alle Schritte des Verarbeitungsverfahrens für IOAM-Informationen gemäß einem der Ansprüche 1 bis 3 realisiert werden.

## Revendications

1. Procédé de traitement des informations relatives à l'administration et à la maintenance des opérations en bande (IOAM), appliquée dans un scénario d'épissage de tunnel, dans lequel les tunnels sont épissés au niveau d'une sortie, comprenant :
recevoir (200) d'un message de données ;
supprimer (201) un en-tête de tunnel de couche externe original du message de données et déterminer un type de tunnel d'une sortie, en réponse à la détermination qu'un noeud actuel est un point final d'un tunnel actuel selon l'en-tête de tunnel de couche externe original du message de données ;
ajouter (202) des informations IOAM dans le message de données et des informations IOAM du noeud actuel au message de données, selon que le noeud actuel prend en charge l'ajout d'informations IOAM pour le type de tunnel de la sortie ; et
encapsuler (203) un nouvel en-tête de tunnel de couche externe correspondant au type de tunnel de la sortie pour le message de données, et envoyer le message de données encapsulé à un noeud suivant,
dans lequel ajouter (202) des informations IOAM dans le message de données et des informations IOAM du noeud actuel au message de données, selon que le noeud actuel supporte ou n'ajouter pas d'informations IOAM pour le type de tunnel de la sortie, comprend au moins l'un des éléments suivants :
ajouter les informations IOAM dans l'en-tête de tunnel de la couche externe original du message de données et les informations IOAM du noeud actuel à un en-tête de message de la couche interne du message de données, en réponse à la détermination que le noeud actuel ne prend pas en charge d'ajouter d'informations IOAM pour le type de tunnel de la sortie ; et
ajouter les informations IOAM dans l'en-tête de tunnel de la couche externe original ou dans l'en-tête de message de la couche interne du message de données et les informations IOAM du noeud actuel au nouvel en-tête de tunnel de la couche externe du message de données correspondant au type de tunnel de l'expéditeur, après avoir déterminé que le noeud actuel prend en charge d'ajouter d'informations IOAM pour le type de tunnel de la sortie,
dans le cas où l'on détermine que le noeud actuel n'est pas le point final du tunnel actuel d'après l'en-tête de tunnel de la couche externe d'origine du message de données, la procédé comprend au moins l'une des opérations suivantes :
ajouter les informations IOAM du noeud actuel à l'en-tête original du tunnel de la couche externe du message de données et envoyer le message de données au noeud suivant, en réponse à l'en-tête original du tunnel de la couche externe du message de données contenant les informations IOAM ; et
envoyer le message de données au noeud suivant, en réponse à l'en-tête de tunnel de couche externe original du message de données ne contenant pas les informations IOAM.

2. Le procédé de traitement selon la revendication 1, avant de supprimer (201) l'en-tête de tunnel de la couche externe originale du message de données, consiste en outre de ce qui suit :
obtenir des informations IOAM à partir de l'en-tête de tunnel de la couche externe originale du message de données, et mettre en mémoire tampon des informations IOAM obtenues ; et
ajouter les informations IOAM dans l'en-tête du tunnel de la couche externe original du message de données et les informations IOAM du noeud actuel à l'en-tête du message de la couche interne du message de données, ce qui comprend :
ajouter les informations IOAM mises en mémoire tampon et les informations IOAM du noeud actuel à l'en-tête du message de la couche interne du message de données.

3. Procédé de traitement selon la revendication 1, avant de supprimer (201) l'en-tête de tunnel de la couche externe original du message de données, comprend en outre :
obtenir les informations IOAM à partir de l'en-tête original du tunnel de la couche externe du message de données, et mettre en mémoire tampon les informations IOAM obtenues et les informations IOAM du noeud actuel ; et
ajouter les informations IOAM dans l'en-tête de tunnel de la couche externe originale du message de données et les informations IOAM du noeud actuel à l'en-tête de message de la couche interne du message de données, comprenant :
ajouter les informations IOAM mises en mémoire tampon à l'en-tête de message de la couche interne du message de données.

4. Dispositif de traitement des informations relatives à l'administration et à la maintenance des opérations en bande (IOAM), appliqué dans un scénario d'épissage de tunnel, dans lequel les tunnels sont épissés au niveau d'une sortie, comprenant :
un module de réception (801), configuré pour recevoir un message de données ; et
un module de traitement (802), configuré pour supprimer un en-tête de tunnel de couche externe original du message de données et déterminer un type de tunnel d'une sortie, en réponse à la détermination qu'un noeud actuel est un point final d'un tunnel actuel selon l'en-tête de tunnel de couche externe original du message de données ; ajouter des informations IOAM dans le message de données et des informations IOAM du noeud actuel au message de données, selon que le noeud actuel prend en charge d'ajouter d'informations IOAM pour le type de tunnel de la sortie ; et encapsuler un nouvel en-tête de tunnel de couche externe correspondant au type de tunnel de la sortie pour le message de données, et envoyer le message de données encapsulé à un noeud suivant,
le module de traitement (802) est configuré pour effectuer au moins l'une des opérations suivantes afin de mettre en oeuvre d'ajouter des informations IOAM dans le message de données et les informations IOAM du noeud actuel au message de données, selon que le noeud actuel prend en charge d'ajouter d'informations IOAM pour le type de tunnel de la sortie :
ajouter les informations IOAM dans l'en-tête de tunnel de la couche externe d'origine du message de données et les informations IOAM du noeud actuel à un en-tête de message de la couche interne du message de données, en réponse à la détermination que le noeud actuel ne prend pas en charge d'ajouter d'informations IOAM pour le type de tunnel de la sortie ; et
ajouter les informations IOAM dans l'en-tête de tunnel de la couche externe d'origine ou dans l'en-tête de message de la couche interne du message de données et les informations IOAM du noeud actuel au nouvel en-tête de tunnel de la couche externe du message de données correspondant au type de tunnel de l'expéditeur, après avoir déterminé que le noeud actuel prend en charge d'ajouter d'informations IOAM pour le type de tunnel de l'expéditeur,
dans le cas où il est déterminé que le noeud actuel n'est pas le point final du tunnel actuel selon l'en-tête de tunnel de couche externe original du message de données, le module de traitement (802) est configuré pour :
ajouter les informations IOAM du noeud actuel à l'en-tête de tunnel de couche externe original du message de données et envoyer le message de données au noeud suivant, en réponse à l'en-tête de tunnel de couche externe original du message de données contenant les informations IOAM ; et
envoyer le message de données au noeud suivant, en réponse à l'en-tête de tunnel de couche externe original du message de données ne contenant pas les informations IOAM.

5. Dispositif de traitement selon la revendication 4, dans lequel
avant de supprimer l'en-tête de tunnel de couche externe d'origine du message de données, le module de traitement (802) est en outre configuré pour : obtenir les informations IOAM de l'en-tête de tunnel de couche externe d'origine du message de données, et mettre en mémoire tampon les informations IOAM obtenues ; et
le module de traitement (802) est configuré pour effectuer l'opération suivante afin de mettre en mémoire tampon d'ajouter des informations IOAM dans l'en-tête du tunnel de la couche externe d'origine du message de données et les informations IOAM du noeud actuel à l'en-tête du message de la couche interne du message de données : ajouter les informations IOAM mises en mémoire tampon et les informations IOAM du noeud actuel à l'en-tête du message de la couche interne du message de données.

6. Dispositif de traitement selon la revendication 4, dans lequel
avant de supprimer l'en-tête de tunnel de couche externe original du message de données, le module de traitement (802) est en outre configuré pour : obtenir les informations IOAM à partir de l'en-tête de tunnel de couche externe original du message de données, et mettre en mémoire tampon les informations IOAM obtenues et les informations IOAM du noeud actuel ; et
le module de traitement (802) est configuré pour effectuer l'opération suivante afin de mettre en mémoire tampon d'ajouter des informations IOAM dans l'en-tête de tunnel de la couche externe originale du message de données et les informations IOAM du noeud actuel à l'en-tête de message de la couche interne du message de données : ajouter les informations IOAM mises en mémoire tampon à l'en-tête de message de la couche interne du message de données.

7. Support de stockage lisible par ordinateur sur lequel est stocké un programme d'ordinateur, dans lequel, lorsque le programme d'ordinateur est exécuté par un processeur, toutes les étapes du procédé de traitement des informations IOAM selon l'une des revendications 1 à 3 sont réalisées.
